# EUROPÄISCHE PATENTSCHRIFT

(11) **EP 2 593 505 B1**
(45) Veröffentlichungstag und Bekanntmachung des Hinweises auf die Patenterteilung: **13.05.2020**
(21) Anmeldenummer: 11738163.2
(22) Anmeldetag: 06.07.2011
(51) Int. Cl.: C08K 5/00, C08K 5/16, C08K 5/3492, C08K 5/524, C08K 5/5313, C08K 3/00, C08K 3/22, C08K 3/24, C08K 9/02

(54) **FLAMMSCHUTZMITTEL-STABILISATOR-KOMBINATION FÜR THERMOPLASTISCHE POLYMERE**
FLAME RETARDANT-STABILIZER COMBINATION FOR THERMOPLASTIC POLYMERS
COMBINAISON AGENT IGNIFUGEANT-STABILISANT POUR POLYMÈRES THERMOPLASTIQUES

(30) Priorität: 13.07.2010 DE 102010026973
(43) Veröffentlichungstag der Anmeldung: 22.05.2013
(73) Patentinhaber: Clariant International Ltd, 4132 Muttenz (CH)
(72) Erfinder: HÖROLD, Sebastian, 86420 Diedorf (DE); WANZKE, Wolfgang, 86159 Augsburg (DE); SCHLOSSER, Elke, 86163 Augsburg (DE)
(74) Vertreter: Mikulecky, Klaus
(86) Internationale Anmeldenummer: PCT/EP2011/003358
(87) Internationale Veröffentlichungsnummer: WO 2012/007124

(56) Entgegenhaltungen:
- EP-A1- 0 964 886
- EP-A1- 1 511 802
- EP-A1- 1 537 173
- EP-A1- 1 705 220
- EP-A1- 1 710 275
- EP-A2- 1 975 217
- WO-A1-2010/139369
- WO-A2-2008/154600
- WO-A2-2010/030478

## Beschreibung

Die Erfindung betrifft eine Flammschutzmittel-Stabilisator-Kombination für thermoplastische Polymere, sowie polymere Formmassen, die solche Flammschutzmittel-Stabilisator-Kombinationen enthalten.

Die Verarbeitung von thermoplastischen Kunststoffen erfolgt bis auf wenige Ausnahmen in der Schmelze. Die damit verbundenen Struktur- und Zustandsänderungen übersteht kaum ein Kunststoff, ohne sich in seiner chemischen Struktur zu verändern. Vernetzungen, Oxidation, Molekulargewichtsänderungen und damit auch Änderungen der physikalischen und technischen Eigenschaften können die Folge sein. Um die Belastung der Polymere während der Verarbeitung zu reduzieren, setzt man je nach Kunststoff unterschiedliche Additive ein. Oft werden Stabilisatoren zugegeben, die die Veränderungsprozesse wie Vernetzungs- oder Abbaureaktionen unterbinden oder zumindest bremsen. Vielfach werden Gleitmittel beigemengt, die primär die Aufgabe haben, das Fließverhalten der Schmelze zu verbessern.

In der Regel werden unterschiedlicher Additive gleichzeitig verwendet. So werden Antioxidantien und Stabilisatoren eingesetzt, damit der Kunststoff ohne chemische Schädigung die Verarbeitung übersteht und anschließend lange Zeit gegen äußere Einflüsse wie Hitze, UV-Licht, Witterung und Sauerstoff (Luft) stabil ist. Neben der Verbesserung des Fließverhaltens verhindern Gleitmittel ein zu starkes Kleben der Kunststoffschmelze an heißen Maschinenteilen und wirken als Dispergiermittel für Pigmente, Füll- und Verstärkungsstoffe.

Durch die Verwendung von Flammschutzmitteln kann die Stabilität des Kunststoffs bei der Verarbeitung in der Schmelze beeinflusst werden. Flammschutzmittel müssen häufig in hohen Dosierungen zugesetzt werden, um eine ausreichende Flammwidrigkeit des Kunststoffs nach internationalen Normen sicherzustellen. Aufgrund ihrer chemischen Reaktivität, die für die Flammschutzwirkung bei hohen Temperaturen erforderlich ist, können Flammschutzmittel die Verarbeitungsstabilität von Kunststoffen beeinträchtigen. Es kann beispielsweise zu verstärktem Polymerabbau, zu Vernetzungsreaktionen, zu Ausgasungen oder Verfärbungen kommen. Diese nachteiligen Effekte treten bei der Kunststoffverarbeitung ohne Flammschutzmittel gar nicht oder nur in abgeschwächter Form auf.

Ohne den Zusatz von Flammschutzmitteln werden Polyamide z. B. durch kleine Mengen von Kupferhalogeniden sowie aromatische Amine und sterisch gehinderten Phenole stabilisiert, wobei die Erzielung einer langfristigen Stabilität bei hohen Dauergebrauchstemperaturen im Vordergrund steht (H. Zweifel (Ed.): "Plastics Additives Handbook", 5th Edition, Carl Hanser Verlag, München, 2000, Seiten 80 bis 84). Auch Polyester benötigen eine antioxidative Stabilisierung im Wesentlichen für den Dauergebrauch, nicht für den Verarbeitungsprozess.

Insbesondere für thermoplastische Polymere haben sich die Salze von Phosphinsäuren (Phosphinate) als wirksame flammhemmende Zusätze erwiesen (DE-A-2 252 258 und DE-A-2 447 727). Calcium- und Aluminiumphosphinate sind in Polyestern als besonders effektiv wirksam beschrieben worden und beeinträchtigen die Materialeigenschaften der Polymerformmassen weniger als die Alkalimetallsalze (EP-A-0 699 708).

Darüber hinaus wurden synergistische Kombinationen von Phosphinaten mit bestimmten stickstoffhaltigen Verbindungen gefunden, die in einer ganzen Reihe von Polymeren als Flammschutzmittel effektiver wirken, als die Phosphinate allein (WO-A-97/39053 sowie DE-A-197 34 437 und DE-A-197 37 727).

Zur Stabilisierung von Polymerformmassen mit phosphorhaltigen Flammschutzmitteln haben sich Carbodiimide, Isocyanate und Isocyanurate als wirksam erwiesen (DE-A-199 20 276).

Insbesondere bei der Verwendung phosphorhaltiger Flammschutzmittel in Polyamiden und Polyestern erwies sich die Wirkung der bisher beschriebenen Stabilisatoren als unzureichend, speziell um die bei der Verarbeitung auftretenden Effekte wie Verfärbung und Molekulargewichtsabbau zu unterdrücken.

Die DE-A-196 14 424 beschreibt Phosphinate in Verbindung mit Stickstoffsynergisten in Polyestern und Polyamiden. Die DE-A-199 33 901 beschreibt Phosphinate in Kombination mit Melaminpolyphosphat als Flammschutzmittel für Polyester und Polyamide. Bei der Verwendung dieser sehr wirksamen Flammschutzmittel kann es zu partiellem Polymerabbau sowie zu Verfärbungen des Polymers, insbesondere bei Verarbeitungstemperaturen oberhalb von 300 °C, kommen. Bei Extrusion und Spritzguss wird teilweise störende Qualmentwicklung beobachtet.

Die EP-A-1 537 173 beschreibt den Zusatz von basischen oder amphoteren Oxiden, Hydroxiden, Carbonaten, Silikaten, Boraten, Stannaten, gemischten Oxid-Hydroxiden, Oxid-Hydroxid-Carbonaten, Hydroxid-Silikaten oder Hydroxid-Boraten oder Mischungen dieser Stoffe bei der Verwendung von Phosphinaten oder deren Mischungen mit stickstoffhaltigen Synergisten als Flammschutzmittel. Nachteilig bei der Zugabe von basischen Metalloxiden wie z. B. Zink-, Magnesium- oder Calciumoxid oder Metallhydroxiden wie Magnesiumhydroxid sind die schlechten mechanischen Eigenschaften der so hergestellten flammwidrigen Polymere.

Die WO 2008/154600 A2 beschreibt eine Mischung aus Polybutylenterephthalat, Aluminiumphosphinat, Melaminpolyphosphat und ausgewählte Zinkverbindungen. Für einen wirksamen Flammschutz und zur Erreichung einer hohen Stabilität des Kunststoffs sind allerdings noch weitere Komponenten notwendig. EP-A-1 710 275 offenbart eine ähnliche Flammschutzmittel-Stabilisator-Kombination.

Es war daher Aufgabe der vorliegenden Erfindung, Flammschutzmittelkombinationen für thermoplastische Kunststoffe zur Verfügung zu stellen, die neben der Flammwidrigkeit auch eine stabilisierende Wirkung auf den Kunststoff ausüben, sich durch gute mechanische Eigenschaften, keine Ausblühungen, keine Verfärbungen unter Verarbeitungsbedingungen und gute Glühdrahtbeständigkeit auszeichnen. Gelöst wird diese Aufgabe durch den Zusatz von gecoateten Metalloxiden.

Gegenstand der Erfindung ist daher eine Flammschutzmittel-Stabilisator-Kombination für thermoplastische Polymere, enthaltend als Komponente A 30 bis 79,9 Gew.-% eines Phosphinsäuresalzes der Formel (I) und/oder eines Diphosphinsäuresalzes der Formel (II) und/oder deren Polymere, 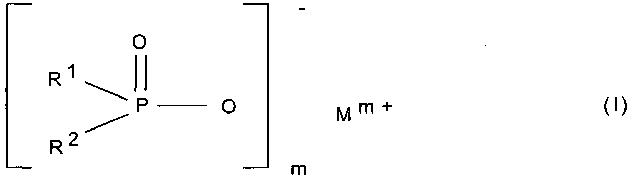 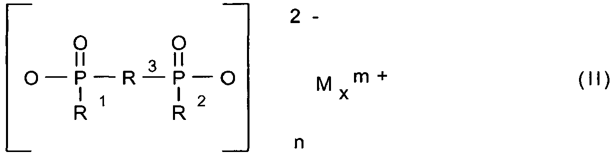 worin
- R¹, R²: gleich oder verschieden sind und H, C₁-C₁₈-Alkyl, C₆-C₁₈-Aryl, C₇-C₁₈-Arylalkyl und/oder C₇-C₁₈-Alkylaryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4
bedeuten,
als Komponente B 20 bis 50 Gew.-% eines stickstoffhaltigen Synergisten und/oder eines Phosphor/Stickstoff Flammschutzmittels und
als Komponente C 0,1 bis 20 Gew.-% eines Zinkoxids gecoated mit 5 bis 50 Gew.-% Zinkphosphat enthält und die Summe der Komponenten A bis C immer 100 Gew.-% beträgt.

Überraschenderweise wurde gefunden, dass erfindungsgemäße Kombinationen von Phosphinsäuresalzen (I). bzw. Diphosphinsäuresalzen (II) bzw. deren Polymere und stickstoffhaltige Synergisten und/oder Phosphor/Stickstoff Flammschutzmittel eine deutlich verbesserte Stabilität bei der Einarbeitung in Polymere aufweisen, wenn Zinkoxid mit einem speziellen Coating zugesetzt werden. Dabei ist das Metalloxid bevorzugt von einem schwerlöslichen Salz desselben Metalls umgeben. Erfindungsgemäss handelt es sich bei dem Salz um Phosphat.

Die erfindungsgemäßen Kombinationen reduzieren die Verfärbung der Kunststoffe bei der Verarbeitung in der Schmelze und unterdrücken den Abbau der Kunststoffe zu Einheiten mit geringerem Molekulargewicht. Gleichzeitig bleibt die Flammwidrigkeit in vollem Umfang erhalten, die Glühdrahtbeständigkeit wird verbessert und es werden kaum Ausblühungen beobachtet. Überraschenderweise wurde auch gefunden, dass durch die erfindungsgemäßen Zusätze die Qualmentwicklung bei Extrusion und Spritzguss vollständig verschwindet.

Bevorzugt sind R¹, R² gleich oder verschieden und bedeuten C₁-C₆-Alkyl linear, verzweigt oder cyclisch und/oder Phenyl und/oder H.

Besonders bevorzugt sind R¹, R² gleich oder verschieden und bedeuten Methyl, Ethyl, n-Propyl, iso-Propyl, n-Butyl, tert.-Butyl, n-Pentyl, Cyclohexyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethylphenylen, tert.-Butylphenylen, Methylnaphthylen, Ethylnaphthylen oder tert.-Butylnaphthylen; Phenylmethylen, Phenylethylen, Phenylpropylen oder Phenylbutylen.

Bevorzugt handelt es sich bei der Komponente B um Kondensationsprodukte des Melamins und/oder um Umsetzungsprodukte von Melamin mit Polyphosphorsäure und/oder um Umsetzungsprodukte von Kondensationsprodukten des Melamins mit Polyphosphorsäure oder Gemische davon.

Bevorzugt handelt es sich bei der Komponente B um Melem, Melam, Melon, Dimelaminpyrophosphat, Melaminpolyphosphat, Melempolyphosphat, Melampolyphosphat, Melonpolyphosphat und/oder gemischte Polysalze davon. Bevorzugt handelt es sich bei der Komponente C um stickstoffhaltige Phosphate der Formeln (NH₄)_{y}H_{3-y}PO₄ bzw. (NH₄PO₃)_{z}, mit y gleich 1 bis 3 und z gleich 1 bis 10.000.

Bevorzugt handelt es sich bei der Komponente B um Ammoniumhydrogenphosphat, Ammoniumdihydrogenphosphat und/oder Ammoniumpolyphosphat.

Bevorzugt handelt es sich bei der Komponente auch C um stickstoffhaltige Synergisten der Formeln (III) bis (VIII) oder Gemische davon 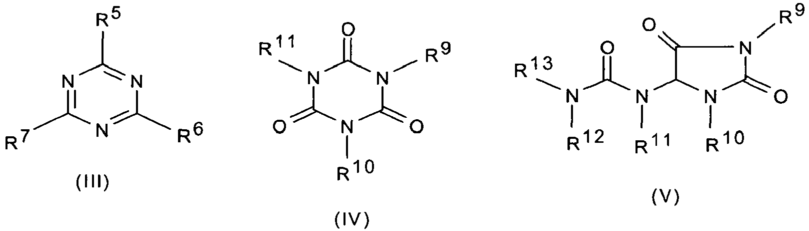 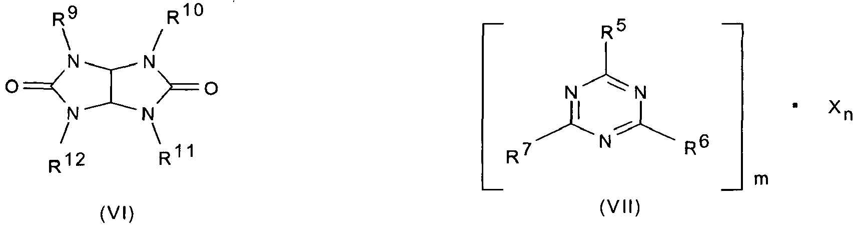 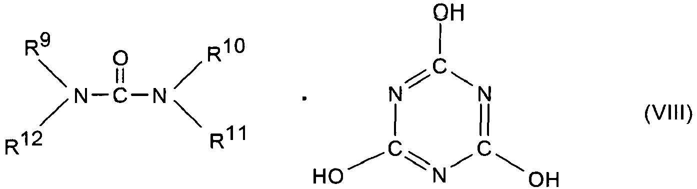 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy,-Acyl, -Acyloxy, C₆-C₁₂-Aryl oder -Arylalkyl, -OR⁸ und -N(R⁸)R⁹, sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy,-Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können,
bedeuten;
oder um oligomere Ester des Tris(hydroxyethyl)isocyanurats mit aromatischen Polycarbonsäuren.

Bevorzugt handelt es sich bei der Komponente B um Benzoguanamin, Tris(hydroxyethyl)isocyanurat, Allantoin, Glycouril, Melamin, Melamincyanurat, Dicyandiamid und/oder Guanidin.

Die gecoateten Metalloxide können beispielsweise wie in der US-A-4,439,572 für Zinkoxid beschrieben hergestellt werden. Eine Zinkoxid-Zinksalz Mischung wird erhalten, indem das Zinkoxid in der korrespondierenden Säure des gewünschten Zinksalzes auf der Oberfläche dispergiert, eine Zeitlang gerührt und anschließend abfiltriert wird. Das Produkt ist ein Zinkoxid gecoatet mit dem Zinksalz und wird als Rauchgasverminderer für PVC verwendet.

Wird Zinkoxid in einer 10 %igen Phosphorsäure bei 60 bis 80 °C dispergiert und anschließend abfiltriert, werden Zinkoxide gecoatet mit 5 bis 50 Gew.-% Zinkphosphat erhalten. Ein derartiges Produkt ist als Kemgard® 981 kommerziell erhältlich. Analog kann aus Magnesiumoxid und Phosphorsäure ein mit Magnesiumphosphat gecoatetes Magnesiumoxid erhalten werden. Analog kann mit Calcium-, Zinn- oder Manganoxid verfahren werden. Mit Schwefelsäure werden mit Sulfaten gecoatete Oxide erhalten.

Bevorzugt enthält die erfindungsgemäße Flammschutzmittel-Stabilisator-Kombination 50 bis 78 Gew.-% der Komponente A, 20 bis 40 Gew.-% der Komponente B und 2 bis 20 Gew.-% der Komponente C.

Bevorzugt enthält die erfindungsgemäße Flammschutzmittel-Stabilisator-Kombination weiterhin Antioxidantien, UV-Absorber, Lichtschutzmittel, Metalldesaktivatoren, peroxidzerstörende Verbindungen, Polyamidstabilisatoren, Basische Co-Stabilisatoren, Nukleierungsmittel, Füllstoffe, Verstärkungsmittel, weitere Flammschutzmittel und/oder weitere Zusätze.

Die Erfindung betrifft auch eine flammfest ausgerüstete Kunststoff-Formmasse, enthaltend eine Flammschutzmittel-Stabilisator-Kombination gemäß einem oder mehreren der Ansprüche 1 bis 14, dadurch gekennzeichnet, dass es sich bei dem Kunststoff um thermoplastischen Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe handelt.

Bevorzugt enthält die flammfest ausgerüstete Kunststoff-Formmasse 2 bis 50 Gew.-% Flammschutzmittel-Stabilisator-Kombination und 50 bis 98 Gew.-% Kunststoff-Formmasse.

Besonders bevorzugt enthält die flammfest ausgerüstete Kunststoff-Formmasse 10 bis 30 Gew.-% Flammschutzmittel-Stabilisator-Kombination und 70 bis 90 Gew.-% Kunststoff-Formmasse.

Die Erfindung betrifft auch Polymer-Formkörper, -Filme, -Fäden und -Fasern enthaltend eine Flammschutzmittel-Stabilisator-Kombination gemäß einem oder mehreren der Ansprüche 1 bis 14 und/oder eine Kunststoff-Formmasse nach Anspruch 15 oder 16.

Bevorzugt handelt es sich bei dem Polymeren der Polymer-Formkörper, - Filme, -Fäden und -Fasern um Polystyrol-HI (High-Impact), Polyphenylenether, Polyamide, Polyester und/oder Polycarbonate.

Bevorzugt enthalten die Polymer-Formkörper, -Filme, -Fäden und -Fasern 2 bis 50 Gew.-% Flammschutzmittel-Stabilisator-Kombination und 50 bis 98 Gew.-% an Polymer.

Bevorzugt bedeutet M Calcium, Aluminium oder Zink.

Geeignete Phosphinate sind in der WO-A-97/39053 beschrieben.

Besonders bevorzugte Phosphinate sind Aluminium-, Calcium- und Zinkphosphinate.

Bevorzugt handelt es sich bei den Melaminpolyphosphaten um Umsetzungsprodukte des Melamins mit kondensierten Phosphorsäuren bzw. Umsetzungsprodukte von Kondensationsprodukten des Melamins mit kondensierten Phosphorsäuren sowie Gemische der genannten Produkte.

Unter den Melaminpolyphosphaten versteht man Verbindungen, die durch Umsetzung von Melamin oder den kondensierten Melaminverbindungen, wie Melam, Melem oder Melon etc., mit kondensierter Phosphorsäure entstehen. Beispiele hierfür sind Melaminpolyphosphat, Melampolyphosphat, Melonpolyphosphat und Melempolyphosphat bzw. gemischte Polysalze, wie sie z. B. in der WO-A-98/39306 beschrieben sind.

Eine besonders gut geeignete Komponente B ist Melaminpolyphosphat.

Die erfindungsgemäße Flammschutzmittel-Stabilisator-Kombination kann auch Carbodiimide enthalten.

Besonders bevorzugt handelt es sich bei dem Kunststoff um Polyamide, Polyester und PPE/HIPS-Blends.

Besonders bevorzugt enthält die Kunststoff-Formmasse die erfindungsgemäße Flammschutzmittel-Stabilisator-Kombination in einer Gesamt-Menge von 10 bis 30 Gew.-%, bezogen auf den Polymergehalt.

Besonders bevorzugt enthalten die Polymer-Formkörper, -Filme, -Fäden und -Fasern die erfindungsgemäße Flammschutzmittel-Stabilisator-Kombination in einer Gesamt-Menge von 10 bis 30 Gew.-%, bezogen auf den Polymergehalt.

In einer besonderen Ausführungsform enthalten die Polymer-Formkörper, - Filme, -Fäden und -Fasern, bezogen auf den Polymergehalt, 2 bis 30 Gew.-% der erfindungsgemäßen Flammschutzmittel-Stabilisator-Kombination, bestehend aus 30 bis 79,9 Gew.-% der Komponente A, 20 bis 50 Gew.-% der Komponente B und 0,1 bis 20 Gew.-% der Komponente C.

Bevorzugt liegt die Flammschutzmittel-Stabilisator-Kombination als Granulat, Schuppen, Feinkorn, Pulver und/oder Micronisat vor.

Bevorzugt liegt die Flammschutzmittel-Stabilisator-Kombination als physikalische Mischung der Feststoffe, als Schmelzmischung, als Kompaktat, als Extrudat oder in Form eines Masterbatches vor.

Die erfindungsgemäße Flammschutzmittel-Stabilisator-Kombination kann zudem Carbodiimide enthalten.

Besonders bevorzugt handelt es sich bei dem Kunststoff um Polyamide, Polyester und PPE/HIPS-Blends.

Bevorzugt enthalten die Polymer-Formkörper, -Filme, -Fäden und -Fasern die Flammschutzmittel-Stabilisator-Kombination in einer Gesamt-Menge von 2 bis 50 Gew.-%, bezogen auf den Polymergehalt. Die Polymermenge beträgt dann 50 bis 98 Gew.-%.

Besonders bevorzugt enthalten die Polymer-Formkörper, -Filme, -Fäden und -Fasern die Flammschutzmittel-Stabilisator-Kombination in einer Gesamt-Menge von 10 bis 30 Gew.-%, bezogen auf den Polymergehalt. Die Polymermenge beträgt dann 70 bis 90 Gew.-%.

Die vorgenannten Additive können in den verschiedensten Verfahrensschritten in den Kunststoff eingebracht werden. So ist es bei Polyamiden oder Polyestern möglich, bereits zu Beginn oder am Ende der Polymerisation/Polykondensation oder in einem folgenden Compoundierprozess die Additive in die Polymerschmelze einzumischen. Weiterhin gibt es Verarbeitungsprozesse bei denen die Additive erst später zugefügt werden. Dies wird insbesondere beim Einsatz von Pigment- oder Additivmasterbatches praktiziert. Außerdem besteht die Möglichkeit, insbesondere pulverförmige Additive auf das durch den Trocknungsprozess eventuell warme Polymergranulat aufzutrommeln.

Die erfindungsgemäße Flammschutzmittel-Stabilisator-Kombination kann in thermoplastischen und duroplastischen Polymeren eingesetzt werden, wie sie weiter unten näher definiert werden.

Geeignete Polyester leiten sich von Dicarbonsäuren und deren Ester und Diolen und/oder von Hydroxycarbonsäuren oder den entsprechenden Lactonen ab. Besonders bevorzugt wird Terephthalsäure und Ethylenglykol, Propan-1,3-diol und Butan-1,3-diol eingesetzt.

Geeignete Polyester sind u.a. Polyethylenterephthalat, Polybutylenterephthalat (Celanex® 2500, Celanex® 2002, Fa Celanese; Ultradur®, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Die erfindungsgemäß hergestellten flammgeschützten Polyester-Formmassen werden bevorzugt in Polyester-Formkörpern eingesetzt.

Bevorzugte Polyester-Formkörper sind Fäden, Fasern, Folien und Formkörper, die als Dicarbonsäure-Komponente hauptsächlich Terephthalsäure und als Diolkomponente hauptsächlich Ethylenglykol enthalten.

Bevorzugt beträgt der resultierende Phosphorgehalt in aus flammgeschützten Polyester hergestellten Fäden und Fasern 0,1 - 18, bevorzugt 0,5 - 15 und bei Folien 0,2 - 15, bevorzugt 0,9 - 12 Gew.-%.

Geeignete Polystyrole sind Polystyrol, Poly-(p-methylstyrol) und/oder Poly-(alpha-methylstyrol).

Bevorzugt handelt es sich bei den geeigneten Polystyrolen um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den geeeigneten Polystyrolen auch um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als so genannte ABS-, MBS-, ASA- oder AES-Polymere bekannt sind.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2,12, Polyamid 4, Polyamid 4,6, Polyamid 6, Polyamid 6,6, Polyamid 6,9, Polyamid 6,10, Polyamid 6,12, Polyamid 6,66, Polyamid 7,7, Polyamid 8,8, Polyamid 9,9, Polyamid 10,9, Polyamid 10,10, Polyamid 11, Polyamid 12, usw. Diese sind z. B unter den Handelsnamen Nylon®, Fa. DuPont, Ultramid®, Fa. BASF, Akulon® K122, Fa. DSM, Zytel® 7301, Fa. DuPont; Durethan® B 29, Fa. Bayer und Grillamid®, Fa. Ems Chemie bekannt.

Geeignet sind auch aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylen-terephthalamid oder Poly-m-phenylenisophthalamid, Blockcopolymere der vorstehend genannten Polyamide mit Polyolefinen, Olefin-Copolymeren, lonomeren oder chemisch gebundenen oder gepfropften Elastomeren, oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Die Erfindung betrifft schließlich auch ein Verfahren zur Herstellung von flammgeschützten Polymer-Formkörpern, dadurch gekennzeichnet, dass erfindungsgemäße flammgeschützte Polymer-Formmassen durch Spritzgießen (z. B. Spritzgießmaschine (Typ Aarburg Allrounder) und Pressen, Schaumspritzgießen, Gasinnendruck-Spritzgießen, Blasformen, Foliengießen, Kalandern, Laminieren oder Beschichten bei höheren Temperaturen zum flammgeschützten Polymer-Formkörper verarbeitet wird.

Bevorzugt handelt es sich bei den duroplastischen Polymeren um ungesättigte Polyesterharze (UP-Harze), die sich von Copolyestern gesättigter und ungesättigter Dicarbonsäuren oder deren Anhydriden mit mehrwertigen Alkoholen, sowie Vinylverbindungen als Vernetzungsmittel ableiten. UP-Harze werden gehärtet durch radikalische Polymerisation mit Initiatoren (z. B. Peroxiden) und Beschleunigern.

Bevorzugte ungesättigte Dicarbonsäuren und -derivate zur Herstellung der Polyesterharze sind Maleinsäureanhydrid und Fumarsäure.

Bevorzugte gesättigte Dicarbonsäuren sind Phthalsäure, Isophthalsäure, Terephthalsäure, Tetrahydrophthalsäure, Adipinsäure.

Bevorzugte Diole sind 1,2 Propandiol, Ethylenglycol, Diethylenglycol und Neopentylglycol, Neopentylglycol, ethoxyliertes oder propoxyliertes Bisphenol A.

Bevorzugte Vinylverbindung zur Vernetzung ist Styrol.

Bevorzugte Härtersysteme sind Peroxide und Metallcoinitiatoren z. B. Hydroperoxide und Cobaltoctanoat und/oder Benzoylperoxid und aromatische Amine und/oder UV-Licht und Photosensibilisatoren, z. B. Benzoinether.

Bevorzugte Hydroperoxide sind Di-tert.-butylperoxid, tert.-Butylperoctoat, tert.-Butylperpivalat, tert.-Butylper-2-ethylhexanoat, tert.-Butylpermaleinat, tert.-Butylperisobutyrat, Benzoylperoxid, Diacetylperoxid, Succinylperoxid, p-Chlorbenzoylperoxid, Dicyclohexylperoxiddicarbonat.

Bevorzugt werden Initiatoren in Mengen von 0,1 bis 20 Gew. -%, vorzugsweise 0,2 bis 15 Gew.-%, berechnet auf die Masse aller Comonomeren, eingesetzt.

Bevorzugte Metallcoinitiatoren sind Kobalt-, Mangan-, Eisen-, Vanadium-, Nickel- oder Bleiverbindungen. Bevorzugt werden Metallcoinitiatoren in Mengen von 0,05 bis 1 Gew.-%, berechnet auf die Masse aller Comonomeren, eingesetzt.

Bevorzugte aromatische Amine sind Dimethylanilin, Dimethyl-p-toluol, Diethylanilin und Phenyldiethanolamine.

Ein Verfahren zur Herstellung von flammgeschützten Copolymerisaten ist dadurch gekennzeichnet, dass man mindestens ein ethylenisch ungesättigtes Dicarbonsäureanhydrid, abgeleitet von mindestens einer C₄-C₈-Dicarbonsäure, mindestens eine vinylaromatische Verbindung und ein Polyol copolymerisiert und mit erfindungsgemäßen Addukten von Alkylphosphonigsäurederivaten und diesterbildenden Olefinen umsetzt.

Ein Verfahren zur Herstellung von flammwidrigen duroplastischen Massen ist dadurch gekennzeichnet, dass man ein duroplastisches Harz mit einer erfindungsgemäßen Flammschutzmittel-Stabilisator-Kombination und gegebenenfalls weiteren Flammschutzmitteln, Synergisten, Stabilisatoren, Additiven und Füll- oder Verstärkungsstoffen vermischt und die resultierende Mischung bei Drücken von 3 bis 10 bar und Temperaturen von 20 bis 60 °C nass presst (Kaltpressung).

Ein weiteres Verfahren zur Herstellung von flammwidrigen duroplastischen Massen ist dadurch gekennzeichnet, dass man ein duroplastisches Harz mit einer erfindungsgemäße Flammschutzmittel-Stabilisator-Kombination und gegebenenfalls weiteren Flammschutzmitteln, Synergisten, Stabilisatoren, Additiven und Füll- oder Verstärkungsstoffen vermischt und die resultierende Mischung bei Drücken von 3 bis 10 bar und Temperaturen von 80 bis 150 °C nass presst (Warm- oder Heißpressung).

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. von Bisphenol-A-diglycidylethern, Bisphenol-F-diglycidylethern, die mittels üblichen Härtern und/oder Beschleunigern vernetzt werden.

Geeignete Glycidylverbindungen sind Bisphenol-A-diglycidylester, Bisphenol-F-diglycidylester, Polyglycidylester von Phenol-Formaldehydharzen und Kresol-Formaldehydharzen, Polyglycidylester von Pththal-, Isophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen.

Geeignete Härter sind aliphatische, cycloaliphatische, aromatische und heterocyclische Amine oder Polyamine wie Ethylendiamin, Diethylentriamin Triethylentetramin, Propan-1,3-diamin, Hexamethylendiamin, Aminoethylpiperazin, Isophorondiamin, Polyamidoamin, Diaminodiphenylmethan, Diaminodiphenylether, Diaminodiphenolsulfone, Anilin-Formaldehyd-Harze, 2,2,4-Trimethylhexan-1,6-diamin, m-Xylylendiamin, Bis(4-aminocyclohexyl)methan, 2,2-Bis(4-aminocyclohexyl)propan, 3-Aminomethyl-3,55-trimethylcyclohexylamin (Isophorondiamin), Polyamidoamine, Cyanguanidin und Dicyandiamid, ebenso mehrbasige Säuren oder deren Anhydride wie z. B. Phthalsäureanhydrid, Maleinsäureanhydrid, Tetrahydrophthalsäureanhydrid, Methyltetrahydrophthalsäureanhydrid, Hexahydrophthalsäureanhydrid und Methylhexahydrophthalsäureanhydrid sowie Phenole wie z. B. Phenol-Novolak-Harz, Cresol-Novolak-Harz, Dicyclopentadien-Phenol-Addukt-Harz, Phenolaralkyl-Harz, Cresolaralkyl-Harz, Naphtholaralkyl Harz, Biphenol-modifiziertes Phenolaralkyl-Harz, Phenoltrimethylolmethan-Harz, Tetraphenylolethan-Harz, Naphthol-Novolak-Harz, Naphthol-Phenol-Kocondensat-Harz, Naphthol-Cresol-Kocondensat-Harz, Biphenol- modifiziertes Phenol-Harz und Aminotriazinmodifiziertes Phenol-Harz. Alle Härter können alleine oder in Kombination miteinander eingesetzt werden.

Geeignete Katalysatoren bzw. Beschleuniger für die Vernetzung bei der Polymerisation sind tertiäre Amine, Benzyldimethylamin, N-Alkylpyridine, Imidazol, 1-Methylimidazol, 2-Methylimidazol, 2-Ethyl-4-methylimidazol, 2-Ethyl-4-methylimidazol, 2-Phenylimidazol, 2-Heptadecylimidazol, Metallsalze organischer Säuren, Lewis Säuren und Amin-Komplex-Salze.

Die Formulierung der Erfindung kann auch andere Additive, die herkömmlich in Epoxidharz-Formulierungen eingesetzt werden, wie Pigmente, Farbstoffe und Stabilisatoren, enthalten.

Epoxidharze sind geeignet zum Verguss von elektrischen bzw. elektronischen Bauteilen und für Tränk- und Imprägnierprozesse. In der Elektrotechnik werden Epoxidharze überwiegend flammwidrig ausgerüstet und für Leiterplatten und Isolatoren eingesetzt.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze. Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugte Polyole, sind Alkenoxidaddukte von Ethylenglykol, 1,2-Propandiol, Bisphenol A, Trimethylolpropan, Glycerin, Pentaerythrol, Sorbit, Zucker, abgebaute Stärke, Ethylendiamin, Diaminotoluol und/oder Anilin, die als Initiator dienen. Die bevorzugten Oxyalkylierungsmittel,- enthalten bevorzugt 2 bis 4 Kohlenstoffatome, besonders bevorzugt sind es Ethylenoxid und Propylenoxid.

Bevorzugte Polyester-Polyole werden durch Polykondensation eines Polyalkoholes wie Ethylenglykol, Diethylenglykol, Propylenglykol, 1,4-Butandiol, 1,5-Pentandiol, Methylpentandiol, 1,6-Hexandiol, Trimethylolpropan, Glycerin, Pentaerythritol, Diglycerol, Traubenzucker und/oder Sorbit mit einer dibasischen Säure wie Oxalsäure, Malonsäure, Bernsteinsäure, Weinsäure, Adipinsäure, Sebacinsäure, Maleinsäure, Fumarsäure, Phthalsäure und/oder Terephthalsäure erhalten. Diese Polyester-Polyole können alleine oder in Kombination benutzt werden.

Geeignete Polyisocyanate sind aromatische, alicyclische or aliphatische Polyisocyanate, mit nicht weniger als zwei Isocyanat-Groupen und Mischungen davon. Bevorzugt sind aromatische Polyisocyanate wie Tolyldiisocyanat, Methylendiphenyldiisocyanat, Naphthylendiisocyanate, Xylylendiisocyanat, Tris-4-isocyanatophenyl)methan und Polymethylenpolyphenylendiisocyanate; alicyclische Polyisocyanate wie Methylendiphenyldiisocyanat, Tolyldiisocyanat; aliphatische Polyisocyanate und Hexamethylendiisocyanat, Isophorendiisocyanat, Demeryldiisocyanat, 1,1-Methylenbis(4-isocyanatocyclohexan-4,4'-Diisocyanatodicyclohexylmethan-Isomerengemisch, 1,4-Cyclohexyldiisocyanat, Desmodur® -Typen (Bayer) und Lysindiisocyanat und Mischungen davon.

Geeignete Polyisocyanate sind modifizierte Produkte, die durch Reaktion von Polyisocyanat mit Polyol, Harnstoff, Carbodiimid und/oder Biuret erhalten werden.

Bevorzugt ist das Gewichtverhältnis des Polyisocyanats zu Polyol 170 zu 70 Gew.-Teile, vorzugsweise 130 zu 80 Gew.-Teile, bezogen auf 100 Gew.-Teile des Polyols.

Bevorzugt ist das Gewichtverhältnis des Katalysators 0,1 bis 4 Gew.-Teile, besonders bevorzugt 1 bis 2 Gew.-Teile bezogen auf 100 Gew.-Teile des Polyols.

Bevorzugte Blähmittel für Polyurethane sind Wasser, Kohlenwasserstoffe, Fluorchlorkohlenwasserstoff, Fluorokohlenwasserstoff etc. Die Menge des Blähmittels für Polyurethane ist 0,1 bis 1,8 Gew.-Teile, vorzugsweise 0,3 bis 1,6 Gew.-Teile und insbesondere 0,8 bis 1,6 Gew.-Teile bezogen auf 100 Gew.-Teile des Polyols.

Bevorzugt wird die Mischung in einer Formmasse eines Polyamides oder eines Polyesters verwendet. Geeignete Polyamide sind z. B. in der DE-A-199 20 276 beschrieben.

Bevorzugt handelt es sich bei den Polyamiden um solche vom Aminosäure-Typ und/oder vom Diamin-Dicarbonsäure-Typ.

Bevorzugt handelt es sich bei den Polyamiden um Polyamid 6, Polyamid 6.10, Polyamid 10.10, Polyamid 12, Polyamid 4.6, Polyamid 11 und/oder Polyamid 6.6.

Bevorzugt sind die Polyamide unverändert, gefärbt, gefüllt, ungefüllt, verstärkt, unverstärkt oder auch anders modifiziert.

Bevorzugt handelt es sich bei den Polyestern um Polyethylenterephthalat oder Polybutylenterephthalat.

Bevorzugt sind die Polyester unverändert, gefärbt, gefüllt, ungefüllt, verstärkt, unverstärkt oder auch anders modifiziert.

Gegebenenfalls können dem Polymeren weitere Additive zugesetzt werden. Als Additive können Wachse, Lichtschutzmittel, Stabilisatoren, Antioxidantien, Antistatika oder Mischungen derartiger Additive zugesetzt werden.

Als bevorzugte Stabilisatoren können Phosphonite, Phosphite oder Carbodiimide verwendet werden.

Vorgenannte Zusatzstoffe können auch der Flammschutzmittel-Stabilisator-Kombination zugesetzt werden.

### Beispiele

### 1. Eingesetzte Komponenten

Handelsübliche Polymere (Granulate):
Polyamid 6.6 (PA 6.6-GV): Ultramid® A27 (Fa. BASF AG, D)
Polybutylenterephthalat (PBT): Ultradur® B4500 (Fa. BASF AG, D)
Glasfasern:
Vetrotex® 983 EC 10 4,5 mm (Fa. Saint-Gobain-Vetrotex, D)
Vetrotex® 952 EC 10 4,5 mm (Fa. Saint-Gobain-Vetrotex, D)
Flammschutzmittel (Komponente A):
Aluminiumsalz der Diethylphosphinsäure, als DEPAL bezeichnet Flammschutzmittel (Komponente B, erfindungsgemäß):
Melaminpolyphosphat, als MPP bezeichnet, Melapur® 200 (Fa. Ciba SC, CH) Komponente C (Vergleich):
Zinkborat Firebrake® ZB und Firebrake® 500, Fa. Borax, USA
Zinkoxid aktiv, Fa. Rheinchemie, D
Zinkphosphat, Sigma-Aldrich, D
Komponente C (erfindungsgemäß):
Kemgard® 981 (Zinkoxid-Zinkphosphat Mischung), Fa. Sherwin-Williams, USA
Kemgard® 911B (Zinkoxid-Zinkmolybdat Mischung), Fa. Sherwin-Williams, USA

### 2. Herstellung, Verarbeitung und Prüfung von flammhemmenden Kunststoff-Formmassen

Die Flammschutzmittelkomponenten wurden in dem in der Tabelle angegebenen Verhältnis miteinander vermischt und über den Seiteneinzug eines Doppelschnecken-Extruders (Typ Leistritz ZSE 27/44D) bei Temperaturen von 260 bis 310 °C in PA 6.6 bzw. bei 250 bis 275 °C in PBT eingearbeitet. Die Glasfasern wurden über einen zweiten Seiteneinzug zugegeben. Der homogenisierte Polymerstrang wurde abgezogen, im Wasserbad gekühlt und anschließend granuliert. Nach ausreichender Trocknung wurden die Formmassen auf einer Spritzgießmaschine (Typ Arburg 320 C Allrounder) bei Massetemperaturen von 250 bis 300 °C zu Prüfkörpern verarbeitet und anhand des UL 94-Tests (Underwriter Laboratories) auf Flammwidrigkeit geprüft und klassifiziert.

Nach UL 94 ergeben sich folgende Brandklassen:
V-0: kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende
V-1: kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0
V-2: Zündung der Watte durch brennendes Abtropfen, übrige Kriterien wie bei V-1
Nicht klassifizierbar (nkl): erfüllt nicht die Brandklasse V-2.

Die Fließfähigkeit der Formmassen wurde durch Ermittlung des Schmelzvolumenindex (MVR) bei 275 °C/2,16 kg bestimmt. Ein starker Anstieg des MVR-Wertes deutet auf einen Polymerabbau hin.

Die Verarbeitungseigenschaften in Polyester wurden anhand der spezifischen Viskosität (SV) beurteilt. Aus dem Granulat der Kunststoff-Formmasse wurde nach ausreichender Trocknung eine 1,0 %ige Lösung in Dichloressigsäure hergestellt und der SV-Wert bestimmt. Je höher der SV-Wert ist, desto geringer war der Polymerabbau während der Einarbeitung des Flammschutzmittels.

Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt.

Die Tabelle 1 zeigt Vergleichsbeispiele, in denen eine Flammschutzmittel-Kombination, basierend auf dem Aluminiumsalz der Diethylphosphinsäure (DEPAL) und dem stickstoffhaltigen Synergisten Melaminpolyphosphat (MPP) und dem Metalloxid bzw. -borat oder -phosphat allein verwendet wurden. Die Einarbeitung der Flammschutzmittel in PA 6.6 führt zu einem Polymerabbau, erkennbar an hohen MVR-Werten, und zu deutlichen Ausblühungen. Es wird nur ein GWIT von 750 °C erreicht.

Die Ergebnisse der Beispiele, in denen die Flammschutzmittel-Mischung gemäß der Erfindung eingesetzt wurde, sind in den Tabelle 2 zu finden. Alle Mengen sind als Gew.-% angegeben und beziehen sich auf die Kunststoff-Formmasse einschließlich der Flammschutzmittel-Kombination und Zusatzstoffen.

Aus den Beispielen geht hervor, dass die erfindungsgemäße Mischung aus den Komponenten Phosphinat, Melaminpolyphosphat und gecoatetes Metalloxid (Zinkoxid), die Verarbeitbarkeit der Polymere verbessern, ohne die Flammschutzwirkung zu beeinträchtigen. Es werden kaum Ausblühungen beobachtet, die niedrigen Schmelzindices zeigen geringen Polymerabbau, die mechanischen Werte sind hoch und es wird ein GWIT von 775 °C erreicht. Soweit nicht anders angegeben, handelt es sich bei Mengenangaben immer um Gew.-%.

**Tabelle 1: PA 66 GF 30 Versuchsergebnisse. V1-V4 sind Vergleichsbeispiele**

| | V-1 | V-2 | V-3 | V-4 |
|---|---|---|---|---|
| Polyamid 66 | 49,55 | 49,55 | 49,55 | 49,55 |
| Glasfasern 983 | 30 | 30 | 30 | 30 |
| A: DEPAL | 12,6 | 12,6 | 12,6 | 12,6 |
| B: MPP | 6,4 | 6,4 | 6,4 | 6,4 |
| C1: Zinkborat | 1 | | | |
| C2: Zinkoxid | | 1 | | 0,5 |
| C3: Zinkphosphat | | | 1 | 0,5 |
| D: CaV 102 | 0,25 | 0,25 | 0,25 | 0,25 |
| E: P-EPQ | 0,20 | 0,20 | 0,20 | 0,20 |
| UL 94 0,8 mm | V-0 | V-0 | V-0 | V-0 |
| GWIT 0,75 mm | 750 °C | 750 °C | 750 °C | 750 °C |
| MVR 275 °C/2,16 kg | 8 | 16 | 17 | 12 |
| Polymerstrang | glatt | rauh | rauh | rauh |
| Ausblühungen* | deutlich | deutlich | deutlich | deutlich |
| Farbe | weiß | weiß | grau | weiß |
| Schlagzähigkeit [kJ/m²] | 65 | 50 | 62 | 53 |
| Kerbschlagzähigkeit [kJ/m²] | 9 | 5 | 7 | 6 |

| | | | | |
|---|---|---|---|---|
| * 14 Tage 100 % Feuchte 70 °C | | | | |

**Tabelle 2: PA 66 GF 30 Versuchsergebnisse. Erfindungsgemäße Beispiele B-1 und B-3; Referenzbeispiele B-2 und B-4**

| | B-1 | B-2 | B-3 | B-4 |
|---|---|---|---|---|
| Polyamid 66 | 49,55 | 49,55 | 50,05 | 50,05 |
| Glasfasern 983 | 30 | 30 | 30 | 30 |
| A: DEPAL | 12,6 | 12,6 | 12,6 | 12,6 |
| B: MPP | 6,4 | 6,4 | 6,4 | 6,4 |
| C4: Kemgard 981 | 1 | | 0,5 | |
| C5: Kemgard 911B | | 1 | | 0,5 |
| D: CaV 102 | 0,25 | 0,25 | 0,25 | 0,25 |
| E: P-EPQ | 0,20 | 0,20 | 0,20 | 0,20 |
| UL 94 0,8 mm | V-0 | V-0 | V-0 | V-0 |
| GWIT 0,75 mm | 775 °C | 775 °C | 775 °C | 775 °C |
| MVR 275 °C/2,16 kg | 6 | 7 | 9 | 10 |
| Polymerstrang | glatt | glatt | glatt | glatt |
| Ausblühungen* | gering | gering | gering | gering |
| Farbe | weiß | weiß | weiß | weiß |
| Schlagzähigkeit [kJ/m²] | 62 | 64 | 62 | 63 |
| Kerbschlagzähigkeit [kJ/m²] | 8 | 8 | 7 | 7 |

| | | | | |
|---|---|---|---|---|
| * 14 Tage 100 % Feuchte 70 °C | | | | |

Die Tabelle 3 zeigt Vergleichsbeispiele V5-V8, in denen eine Flammschutzmittel-Kombination, basierend auf dem Aluminiumsalz der Diethylphosphinsäure (DEPAL) und dem stickstoffhaltigen Synergisten Melaminpolyphosphat (MPP) und dem Metalloxid bzw. -borat oder -phosphat allein in Polyester (PBT) verwendet wird. Es wird zwar die Brandklasse UL 94 V-0 erreicht, aber deutlicher Polymerabbau beobachtet, erkennbar an niedrigen SV Zahlen und schlechten mechanischen Werten.

Die erfindungsgemäße Mischung (Tabelle 3, Beispiele B-5 und B-6) aus den Komponenten Phosphinat, Melaminpolyphsophat und gecoatetes Metalloxid (Zinkoxid), verringert den Polymerabbau deutlich, erkennbar an hohen SV Zahlen und besserer Mechanik.

Sowohl in Polyamiden als auch in Polyestern wird mit Kemgard^{®} 981 (Zinkoxid mit Zinkphosphat gecoatet) ein besseres Ergebnis erzielt als mit einer physikalischen Mischung aus Zinkoxid und Zinkphosphat.

**Tabelle 3: PBT GF 25 Versuchsergebnisse. V5-8 sind Vergleichsbeispiele, B5 erfindungsgemäße Flammschutz-Stabilisator-Mischung und B-6 ist Referenzbeispiel**

| | V-5 | V-6 | V-7 | V-8 | B-5 | B-6 |
|---|---|---|---|---|---|---|
| PBT | 54,55 | 54,55 | 54,55 | 54,55 | 54,55 | 54,55 |
| Glasfasern 952 | 25 | 25 | 25 | 25 | 25 | 25 |
| A: DEPAL | 13 | 13 | 13 | 13 | 13 | 13 |
| B: MPP | 6,5 | 6,5 | 6,5 | 6,5 | 6,5 | 6,5 |
| C1: Zinkborat | 0,5 | | | | | |
| C2: Zinkoxid | | 0,5 | | 0,25 | | |
| C3: Zinkphosphat | | | 0,5 | 0,25 | | |
| C4: Kemgard 981 | | | | | 0,5 | |
| C5: Kemgard 911B | | | | | | 0,5 |
| D: Licowax E | 0,25 | 0,25 | 0,25 | 0,25 | 0,25 | 0,25 |
| E: P-EPQ | 0,20 | 0,20 | 0,20 | 0,20 | 0,20 | 0,20 |
| UL 94 0,8 mm | V-0 | V-1 | V-0 | V-0 | V-0 | V-0 |
| Farbe | weiß | weiß | weiß | weiß | weiß | weiß |
| Löseviskosität SV* | 1005 | 1110 | 1210 | 1181 | 1332 | 1320 |
| Bruchdehnung [%] | 1,7 | 1,2 | 1,9 | 1,5 | 2,2 | 2,2 |
| Schlagzähigkeit [kJ/m²] | 40 | 34 | 39 | 36 | 49 | 47 |
| Kerbschlagzähigkeit [kJ/m²] | 6,3 | 5,6 | 6,2 | 5,8 | 7,6 | 7,5 |

| | | | | | | |
|---|---|---|---|---|---|---|
| * in Dichloressigsäure, reines PBT (uncompoundiert) hat 1450 | | | | | | |

## Patentansprüche

1. Flammschutzmittel-Stabilisator-Kombination für thermoplastische Polymere, enthaltend als Komponente A 30 bis 79,9 Gew.-% eines Phosphinsäuresalzes der Formel (I) und/oder eines Diphosphinsäuresalzes der Formel (II) und/oder deren Polymere, 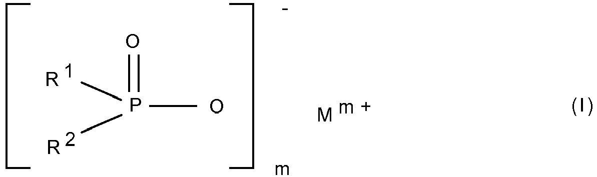 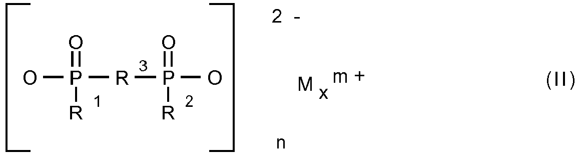 worin
R¹, R² gleich oder verschieden sind und H, C₁-C₁₈-Alkyl, C₆-C₁₈-Aryl, C₇-C₁₈-Arylalkyl und/oder C₇-C₁₈-Alkylaryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4;
n 1 bis 4;
x 1 bis 4
bedeuten,
als Komponente B 20 bis 50 Gew.-% eines stickstoffhaltigen Synergisten und/oder eines Phosphor/Stickstoff Flammschutzmittels und als Komponente C 0,1 bis 20 Gew.-% eines Zinkoxids gecoatet mit 5 bis 50 Gew.-% Zinkphosphat enthält und die Summe der Komponenten A bis C immer 100 Gew.-% beträgt.

2. Flammschutzmittel-Stabilisator-Kombination nach Anspruch 1, **dadurch gekennzeichnet, dass** R¹, R² gleich oder verschieden sind und C₁-C₆-Alkyl, linear, verzweigt oder cyclisch und/oder Phenyl und/oder H bedeuten.

3. Flammschutzmittel-Stabilisator-Kombination nach Anspruch 1 oder 2, **dadurch gekennzeichnet, dass** R¹, R² gleich oder verschieden sind und Methyl, Ethyl, n-Propyl, iso-Propyl, n-Butyl, tert.-Butyl, n-Pentyl, Cyclohexyl und/oder Phenyl bedeuten.

4. Flammschutzmittel-Stabilisator-Kombination nach einem oder mehreren der Ansprüche 1 bis 3, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethylphenylen, tert.-Butylphenylen, Methylnaphthylen, Ethylnaphthylen oder tert.-Butylnaphthylen; Phenylmethylen, Phenylethylen, Phenylpropylen oder Phenylbutylen bedeutet.

5. Flammschutzmittel-Stabilisator-Kombination nach einem oder mehreren der Ansprüche 1 bis 4, **dadurch gekennzeichnet, dass** es sich bei der Komponente B um Kondensationsprodukte des Melamins und/oder um Umsetzungsprodukte von Melamin mit Polyphosphorsäure und/oder um Umsetzungsprodukte von Kondensationsprodukten des Melamins mit Polyphosphorsäure oder Gemische davon handelt.

6. Flammschutzmittel-Stabilisator-Kombination nach einem oder mehreren der Ansprüche 1 bis 5, **dadurch gekennzeichnet, dass** es sich bei der Komponente B um Melem, Melam, Melon, Dimelaminpyrophosphat, Melaminpolyphosphat, Melempolyphosphat, Melampolyphosphat, Melonpolyphosphat und/oder gemischte Polysalze davon handelt.

7. Flammschutzmittel-Stabilisator-Kombination nach einem oder mehreren der Ansprüche 1 bis 4, **dadurch gekennzeichnet, dass** es sich bei der Komponente B um stickstoffhaltige Phosphate der Formeln (NH₄)_{y}H_{3-y}PO₄ bzw. (NH₄PO₃)_{z}, mit y gleich 1 bis 3 und z gleich 1 bis 10.000, handelt.

8. Flammschutzmittel-Stabilisator-Kombination nach Anspruch 7, **dadurch gekennzeichnet, dass** es sich bei der Komponente B um Ammoniumhydrogenphosphat, Ammoniumdihydrogenphosphat und/oder Ammoniumpolyphosphat handelt.

9. Flammschutzmittel-Stabilisator-Kombination nach einem oder mehreren der Ansprüche 1 bis 4, **dadurch gekennzeichnet, dass** es sich bei der Komponente B bei den stickstoffhaltigen Synergisten um solche der Formeln (III) bis (VIII) oder Gemische davon 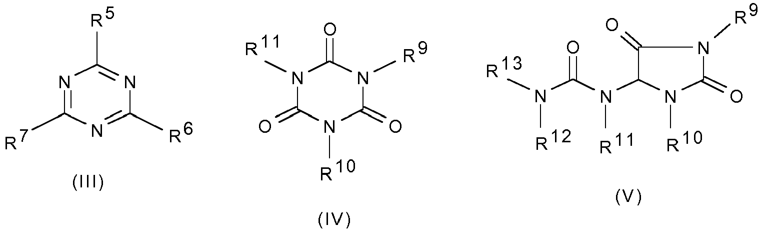 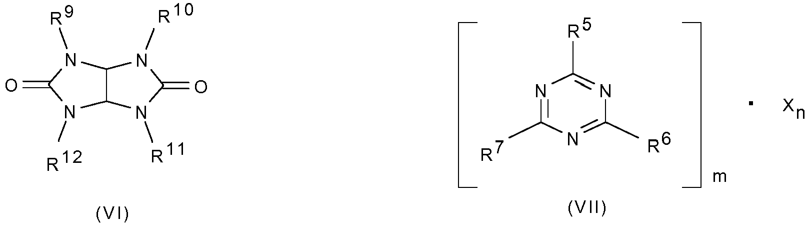 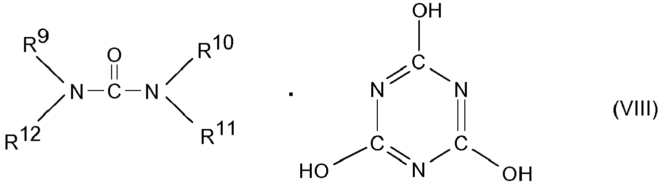 worin
R⁵ bis R⁷ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können,
bedeuten;
oder um oligomere Ester des Tris(hydroxyethyl)isocyanurats mit aromatischen Polycarbonsäuren

10. Flammschutzmittel-Stabilisator-Kombination nach einem oder mehreren der Ansprüche 1 bis 9, **dadurch gekennzeichnet, dass** es sich bei der Komponente B Benzoguanamin, Tris(hydroxyethyl)isocyanurat, Allantoin, Glycouril, Melamin, Melamincyanurat, Dicyandiamid und/oder Guanidin handelt.

11. Flammschutzmittel-Stabilisator-Kombination nach einem oder mehreren der Ansprüche 1 bis 10, **dadurch gekennzeichnet, dass** sie 50 bis 78 Gew.-% der Komponente A, 20 bis 40 Gew.-% der Komponente B und 2 bis 20 Gew.-% der Komponente C enthält.

12. Flammschutzmittel-Stabilisator-Kombination nach einem oder mehreren der Ansprüche 1 bis 11, **dadurch gekennzeichnet, dass** sie weiterhin Antioxidantien, UV-Absorber, Lichtschutzmittel, Metalldesaktivatoren, peroxidzerstörende Verbindungen, Polyamidstabilisatoren, Basische Co-Stabilisatoren, Nukleierungsmittel, Füllstoffe, Verstärkungsmittel, weitere Flammschutzmittel und/oder weitere Zusätze enthält.

13. Flammfest ausgerüstete Kunststoff-Formmasse, enthaltend eine Flammschutzmittel-Stabilisator-Kombination gemäß einem oder mehreren der Ansprüche 1 bis 12, **dadurch gekennzeichnet, dass** es sich bei dem Kunststoff um thermoplastischen Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-Hl) Kunststoffe handelt.

14. Flammfest ausgerüstete Kunststoff-Formmasse nach Anspruch 13, **dadurch gekennzeichnet, dass** sie 2 bis 50 Gew.-% Flammschutzmittel-Stabilisator-Kombination und 50 bis 98 Gew.-% Kunststoff-Formmasse enthält.

15. Polymer-Formkörper, -Filme, -Fäden und -Fasern enthaltend eine Flammschutzmittel-Stabilisator-Kombination gemäß einem oder mehreren der Ansprüche 1 bis 12 und/oder eine Kunststoff-Formmasse nach Anspruch 13 oder 14, **dadurch gekennzeichnet, dass** es sich bei dem Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS handelt.

16. Polymer-Formkörper, -Filme, -Fäden und -Fasern nach nach Anspruch 15, **dadurch gekennzeichnet, dass** sie 2 bis 50 Gew.-% Flammschutzmittel-Stabilisator-Kombination und 50 bis 98 Gew.-% an Polymer enthält.

## Claims

1. Flame retardant-stabilizer combination for thermoplastic polymers, comprising as component A 30 to 79.9% by weight of a phosphinic salt of the formula (I) and/or of a diphosphinic salt of the formula (II) and/or polymers thereof 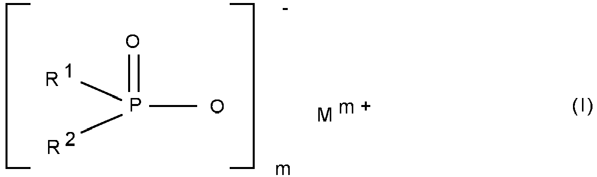 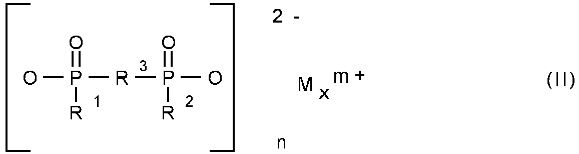 in which
R¹, R² are the same or different and are each H, C₁-C₁₈-alkyl, C₆-C₁₈-aryl, C₇-C₁₈-arylalkyl and/or C₇-C₁₈-alkylaryl;
R³ is linear or branched C₁-C₁₀-alkylene, C₆-C₁₀-arylene, -alkylarylene or-arylalkylene;
M is Mg, Ca, Al, Sb, Sn, Ge, Ti, Zn, Fe, Zr, Ce, Bi, Sr, Mn, Li, Na, K and/or a protonated nitrogen base;
m is 1 to 4;
n is 1 to 4;
x is 1 to 4,
as component B 20 to 50% by weight of a nitrogen-containing synergist and/or of a phosphorus/nitrogen flame retardant and as component C 0.1 to 20% by weight of a zinc oxide coated with 5 to 50% by weight of zinc phosphate and the sum of components A to C always being 100% by weight.

2. Flame retardant-stabilizer combination according to Claim 1, **characterized in that** R¹, R² are the same or different and are each linear, branched or cyclic C₁-C₆-alkyl, and/or phenyl and/or H.

3. Flame retardant-stabilizer combination according to Claim 1 or 2, **characterized in that** R¹, R² are the same or different and are each methyl, ethyl, n-propyl, isopropyl, n-butyl, tert-butyl, n-pentyl, cyclohexyl and/or phenyl.

4. Flame retardant-stabilizer combination according to one or more of Claims 1 to 3, **characterized in that** R³ is methylene, ethylene, n-propylene, isopropylene, n-butylene, tert-butylene, n-pentylene, n-octylene or n-dodecylene; phenylene or naphthylene; methylphenylene, ethylphenylene, tert-butylphenylene, methylnaphthylene, ethylnaphthylene or tert-butylnaphthylene; phenylmethylene, phenylethylene, phenylpropylene or phenylbutylene.

5. Flame retardant-stabilizer combination according to one or more of Claims 1 to 4, **characterized in that** component B comprises condensation products of melamine and/or reaction products of melamine with polyphosphoric acid and/or reaction products of condensation products of melamine with polyphosphoric acid or mixtures thereof.

6. Flame retardant-stabilizer combination according to one or more of Claims 1 to 5, **characterized in that** component B comprises melem, melam, melon, dimelamine pyrophosphate, melamine polyphosphate, melem polyphosphate, melam polyphosphate, melon polyphosphate and/or mixed poly salts thereof.

7. Flame retardant-stabilizer combination according to one or more of Claims 1 to 4, **characterized in that** component B comprises nitrogen-containing phosphates of the formulae (NH₄)_{y}H_{3-y}PO₄ and (NH₄PO₃)_{z}, where y is 1 to 3 and z is 1 to 10 000.

8. Flame retardant-stabilizer combination according to Claim 7, **characterized in that** component B comprises ammonium hydrogenphosphate, ammonium dihydrogenphosphate and/or ammonium polyphosphate.

9. Flame retardant-stabilizer combination according to one or more of Claims 1 to 4, **characterized in that** component B in the case of the nitrogen-containing synergists comprises those of the formulae (III) to (VIII) or mixtures thereof 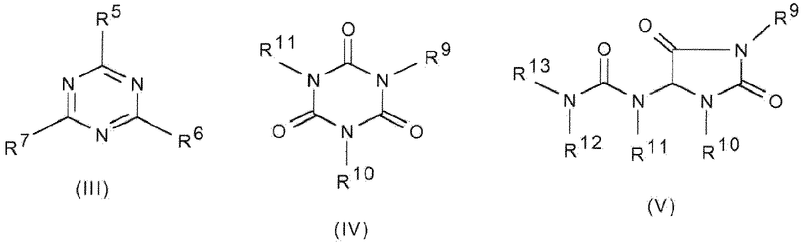 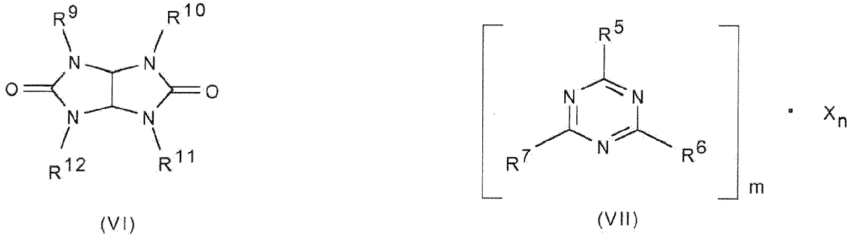 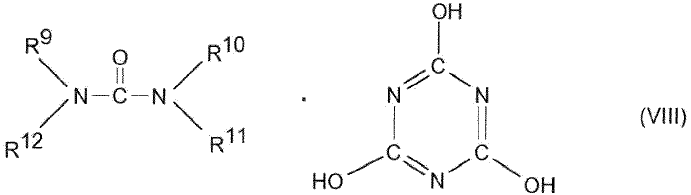 in which
R⁵ to R⁷ are each hydrogen, C₁-C₈-alkyl, C₅-C₁₆-cycloalkyl or -alkylcycloalkyl, possibly substituted by a hydroxyl function or a C₁-C₄-hydroxyalkyl function, C₂-C₈-alkenyl, C₁-C₈-alkoxy, -acyl, -acyloxy, C₆-C₁₂-aryl or -arylalkyl, -OR⁸ and -N(R⁸)R⁹, and also N-alicyclically or N-aromatically,
R⁸ is hydrogen, C₁-C₈-alkyl, C₅-C₁₆-cycloalkyl or -alkylcycloalkyl, possibly substituted by a hydroxyl function or a C₁-C₄-hydroxyalkyl function, C₂-C₈-alkenyl, C₁-C₈-alkoxy, -acyl, -acyloxy, C₆-C₁₂-aryl or -arylalkyl,
R⁹ to R¹³ are the same groups as R⁸, and also -O-R⁸,
m and n are each independently 1, 2, 3 or 4,
X denotes acids which can form adducts with triazine compounds (III);
or oligomeric esters of tris(hydroxyethyl) isocyanurate with aromatic polycarboxylic acids.

10. Flame retardant-stabilizer combination according to one or more of Claims 1 to 9, **characterized in that** component B comprises benzoguanamine, tris(hydroxyethyl) isocyanurate, allantoin, glycoluril, melamine, melamine cyanurate, dicyandiamide and/or guanidine.

11. Flame retardant-stabilizer combination according to one or more of Claims 1 to 10, **characterized in that** it comprises 50 to 78% by weight of component A, 20 to 40% by weight of component B and 2 to 20% by weight of component C.

12. Flame retardant-stabilizer combination according to one or more of Claims 1 to 11, **characterized in that** it further comprises antioxidants, UV absorbers, light stabilizers, metal deactivators, peroxide-destroying compounds, polyamide stabilizers, basic costabilizers, nucleating agents, fillers, reinforcers, further flame retardants and/or further additives.

13. Flame-retardant polymer molding composition comprising a flame retardant-stabilizer combination according to one or more of Claims 1 to 12, **characterized in that** the polymer comprises thermoplastic polymers of the HI (high-impact) polystyrene, polyphenylene ether, polyamide, polyester or polycarbonate type, and blends or polymer blends of the ABS (acrylonitrile-butadiene-styrene) or PC/ABS (polycarbonate/ acrylonitrile-butadiene-styrene) or PPE/HIPS (polyphenylene ether/HI polystyrene) polymer type.

14. Flame-retardant polymer molding composition according to Claim 13, **characterized in that** it comprises 2 to 50% by weight of flame retardant-stabilizer combination and 50 to 98% by weight of polymer molding composition.

15. Polymer molding, film, filament or fiber comprising a flame retardant-stabilizer combination according to one or more of Claims 1 to 12 and/or a polymer molding composition according to Claim 13 or 14, **characterized in that** the polymer comprises HI (high-impact) polystyrene, polyphenylene ethers, polyamides, polyesters, polycarbonates and blends or polymer blends of the ABS (acrylonitrile-butadiene-styrene) or PC/ABS (polycarbonate/ acrylonitrile-butadiene-styrene), polyamide, polyester and/or ABS type.

16. Polymer molding, film, filament or fiber according to Claim 15, **characterized in that** it comprises 2 to 50% by weight of flame retardant-stabilizer combination and 50 to 98% by weight of polymer.

## Revendications

1. Combinaison agent ignifuge-stabilisateur pour polymères thermoplastiques, contenant en tant que composant A 30 à 79,9 % en poids d'un sel d'acide phosphinique de la formule (I) et/ou d'un sel d'acide diphosphinique de la formule (II) et/ou leurs polymères, 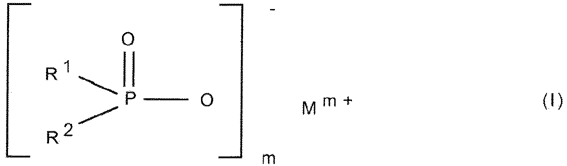 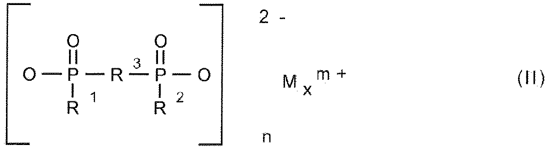 dans lesquelles
R¹, R² sont identiques ou différents, et signifient H, alkyle en C₁-C₁₈, aryle en C₆-C₁₈, arylalkyle en C₇-C₁₈ et/ou alkylaryle en C₇-C₁₈ ;
R³ signifie alkylène en C₁-C₁₀, linéaire ou ramifié, arylène, alkylarylène ou arylalkylène en C₆-C₁₀,
M signifie Mg, Ca, Al, Sb, Sn, Ge, Ti Zn, Fe, Zr, Ce, Bi, Sr, Mn, Li, Na, K et/ou une base azotée protonée ;
m signifie 1 à 4 ;
n signifie 1 à 4 ;
x signifie 1 à 4,
en tant que composant B 20 à 50 % en poids d'un synergiste azoté et/ou d'un agent ignifuge phosphote/azote et en tant que composant C 0,1 à 20 % en poids d'un oxyde de zinc revêtu avec 5 à 50 % en poids de phosphate de zinc, la somme des composants A à C étant toujours de 100 % en poids.

2. Combinaison agent ignifuge-stabilisateur selon la revendication 1, **caractérisée en ce que** R¹, R² sont identiques ou différents, et signifient alkyle en C₁-C₆, linéaire, ramifié ou cyclique, et/ou phényle et/ou H.

3. Combinaison agent ignifuge-stabilisateur selon la revendication 1 ou 2, **caractérisée en ce que** R¹, R² sont identiques ou différents, et signifient méthyle, éthyle, n-propyle, iso-propyle, n-butyle, tert.-butyle, n-pentyle, cyclohexyle et/ou phényle.

4. Combinaison agent ignifuge-stabilisateur selon une ou plusieurs des revendications 1 à 3, **caractérisée en ce que** R³ signifie méthylène, éthylène, n-propylène, iso-propylène, n-butylène, tert.-butylène, n-pentylène, n-octylène ou n-dodécylène ; phénylène ou naphtylène ; méthylphénylène, éthylphénylène, tert.-butylphénylène, méthylnaphtylène, éthylnaphtylène ou tert.-butylnaphtylène, phénylméthylène, phényléthylène, phénylpropylène ou phénylbutylène.

5. Combinaison agent ignifuge-stabilisateur selon une ou plusieurs des revendications 1 à 4, **caractérisée en ce que** le composant B consiste en des produits de condensation de mélamine et/ou en des produits de réaction de mélamine avec de l'acide polyphosphorique et/ou en des produits de réaction de produits de condensation de mélamine avec de l'acide polyphosphorique ou des mélanges de ceux-ci.

6. Combinaison agent ignifuge-stabilisateur selon une ou plusieurs des revendications 1 à 5, **caractérisée en ce que** le composant B consiste en le mélem, le mélam, le mélon, le pyrophosphate de dimélamine, le polyphosphate de mélamine, le polyphosphate de mélem, le polyphosphate de mélam, le polyphosphate de mélon et/ou des polysels mixtes de ceux-ci.

7. Combinaison agent ignifuge-stabilisateur selon une ou plusieurs des revendications 1 à 4, **caractérisée en ce que** le composant B consiste en des phosphates azotés des formules (NH₄)_{y}H_{3-y}PO₄ ou (NH₄PO₃)_{z}, avec y signifiant 1 à 3 et z signifiant 1 à 10 000.

8. Combinaison agent ignifuge-stabilisateur selon la revendication 7, **caractérisée en ce que** le composant B consiste en l'hydrogénophosphate d'ammonium, le dihydrogénophosphate d'ammonium et/ou le polyphosphate d'ammonium.

9. Combinaison agent ignifuge-stabilisateur selon une ou plusieurs des revendications 1 à 4, **caractérisée en ce que** le composant B dans le cas de synergistes azotés consiste en ceux des formules (III) à (VIII) ou leurs mélanges 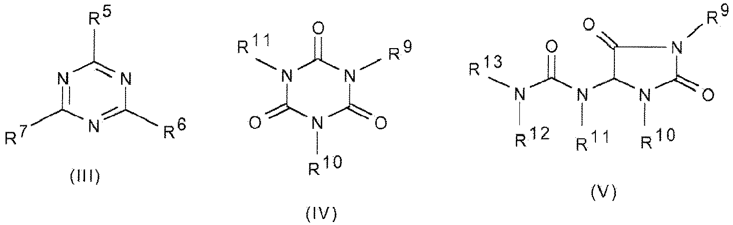 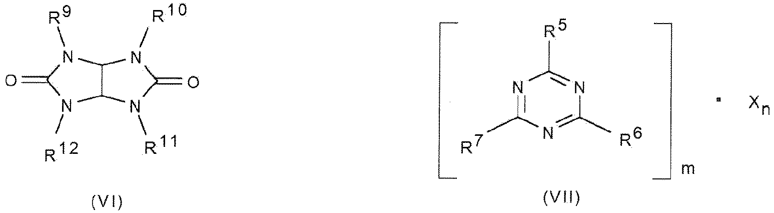 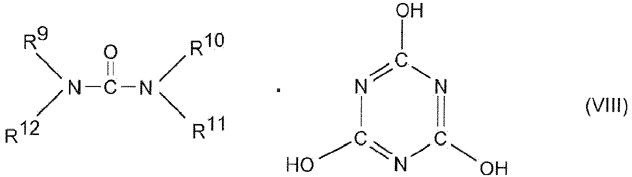 dans lesquelles
R⁵ à R⁷ signifient hydrogène, alkyle en C₁-C₈, cycloalkyle ou alkylcycloalkyle en C₅-C₁₆, éventuellement substitué avec une fonction hydroxy ou hydroxyalkyle en C₁-C₄, alcényle en C₂-C₈, alcoxy, acyle acyloxy en C₁-C₈, aryle ou arylalkyle en C₆-C₁₂, -OR⁸ et -N (R⁸) R⁹, ainsi que N-alicyclique ou N-aromatique,
R⁸ signifie hydrogène, alkyle en C₁-C₈, cycloalkyle ou alkylcycloalkyle en C₅-C₁₆, éventuellement substitué avec une fonction hydroxy ou hydroxyalkyle en C₁-C₄, alcényle en C₂-C₈, alcoxy, acyle, acyloxy en C₁-C₈, ou aryle ou arylalkyle en C₆-C₁₂,
R⁹ à R¹³ signifient les mêmes groupes que R⁸, ainsi que - O-R⁸,
m et n signifient indépendamment l'un de l'autre 1, 2, 3 ou 4,
X signifient des acides qui peuvent former des adduits avec des composés de triazine (III) ;
ou en des esters oligomères d'isocyanurate de tris(hydroxyéthyle) avec des acides polycarboxyliques aromatiques.

10. Combinaison agent ignifuge-stabilisateur selon une ou plusieurs des revendications 1 à 9, **caractérisée en ce que** le composant B consiste en la benzoguanamine, l'isocyanurate de tris(hydroxyéthyle), l'allantoïne, le glycourile, la mélamine, le cyanurate de mélamine, le dicyandiamide et/ou la guanidine.

11. Combinaison agent ignifuge-stabilisateur selon une ou plusieurs des revendications 1 à 10, **caractérisée en ce qu'**elle contient 50 à 78 % en poids du composant A, 20 à 40 % en poids du composant B et 2 à 20 % en poids du composant C.

12. Combinaison agent ignifuge-stabilisateur selon une ou plusieurs des revendications 1 à 11, **caractérisée en ce qu'**elle contient en outre des antioxydants, des absorbeurs UV, des agents photoprotecteurs, des désactivateurs de métaux, des composés détruisant les peroxydes, des stabilisateurs de polyamide, des co-stabilisateurs basiques, des agents de nucléation, des charges, des agents renforçants, d'autres agents ignifuges et/ou d'autres additifs.

13. Matériau de moulage en plastique ignifugé, contenant une combinaison agent ignifuge-stabilisateur selon une ou plusieurs des revendications 1 à 12, **caractérisé en ce que** le plastique consiste en des polymères thermoplastiques de type polystyrène HI (High Impact), des polyéthers de phénylène, des polyamides, des polyesters, des polycarbonates et des mélanges ou des mélanges de polymères de type ABS (acrylonitrile-butadiène-styrène) ou PC/ABS (polycarbonate/acrylonitrile-butadiène-styrène) ou des plastiques PPE/HIPS (polyéther de phénylène/polystyrène HI).

14. Matériau de moulage en plastique ignifugé selon la revendication 13, **caractérisé en ce qu'**il contient 2 à 50 % en poids de combinaison agent ignifuge-stabilisateur et 50 à 98 % en poids de matériau de moulage en plastique.

15. Corps moulés, films, fils et fibres polymères contenant une combinaison agent ignifuge-stabilisateur selon une ou plusieurs des revendications 1 à 12 et/ou un matériau de moulage en plastique selon la revendication 13 ou 14, **caractérisés en ce que** les polymères consistent en du polystyrène HI (High Impact), des polyéthers de phénylène, des polyamides, des polyesters, des polycarbonates et des mélanges ou des mélanges de polymères de type ABS (acrylonitrile-butadiène-styrène) ou PC/ABS (polycarbonate/acrylonitrile-butadiène-styrène), du polyamide, du polyester et/ou de l'ABS.

16. Corps moulés, films, fils et fibres polymères selon la revendication 15, **caractérisés en ce qu'**ils contiennent 2 à 50 % en poids de combinaison agent ignifuge-stabilisateur et 50 à 98 % en poids de polymère.
